(19) Europäisches Patentamt
European Patent Office
Office européen des brevets

(11) **EP 4 332 791 A1**

(12) **EUROPEAN PATENT APPLICATION**
published in accordance with Art. 153(4) EPC

(43) Date of publication:
**06.03.2024  Bulletin 2024/10**

(21) Application number: **22794862.7**

(22) Date of filing: **25.04.2022**

(51) International Patent Classification (IPC):
*G06F 16/906* (2019.01)

(86) International application number:
**PCT/CN2022/089008**

(87) International publication number:
**WO 2022/228392 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.04.2021  CN 202110482171**

(71) Applicant: **DIGITAL CURRENCY INSTITUTE, THE
PEOPLE'S BANK
OF CHINA
Beijing 100071 (CN)**

(72) Inventors:
• **MU, Changchun
Beijing 100071 (CN)**

• **LV, Yuan
Beijing 100071 (CN)**
• **QING, Sude
Beijing 100071 (CN)**
• **WANG, Yanhui
Beijing 100071 (CN)**
• **ZENG, Junwei
Beijing 100071 (CN)**
• **WU, Hao
Beijing 100071 (CN)**

(74) Representative: **Winter, Brandl - Partnerschaft
mbB
Alois-Steinecker-Straße 22
85354 Freising (DE)**

(54) **BLOCKCHAIN ADDRESS CLASSIFICATION METHOD AND APPARATUS**

(57)    The present disclosure relates to the technical field of computers. Disclosed are a method and apparatus for classifying a blockchain address. A specific implementation of the method includes: acquiring blockchain transaction information, where the blockchain transaction information indicates one or more transaction input addresses and one or more transaction output addresses; constructing a transaction bipartite graph corresponding to the blockchain transaction information; obtaining, according to the transaction bipartite graph and a graph embedding algorithm, address vectors respectively corresponding to the one or more transaction input addresses and the one or more transaction output addresses; and using the address vectors as inputs of an address classifier, so as to classify the one or more transaction input addresses and/or the one or more transaction output addresses by the address classifier. By means of the implementation, the accuracy of blockchain address classification is improved.

Fig. 1

S101
Blockchain transaction information is acquired, and the blockchain transaction information indicates one or more transaction input addresses and one or more transaction output addresses

S102
A transaction bipartite graph corresponding to the blockchain transaction information is constructed

S103
Address vectors respectively corresponding to the one or more transaction input addresses and the one or more transaction output addresses are obtained according to the transaction bipartite graph and a graph embedding algorithm

S104
The address vectors are used as enters of an address classifier, so as to classify the one or more transaction input addresses and/or the one or more transaction output addresses by the address classifier

**Description**

**Cross-Reference to Related Application**

This application claims priority to Chinese Patent Application No.202110482171.2 filed on April 30, 2021 and entitled "Method and Apparatus for Classifying Blockchain Address", the disclosure of which is hereby incorporated by reference in its entirety as part or all of this application.

**Technical Field**

The present disclosure relates to technical field of computers, and in particular, to a method and apparatus for classifying a blockchain address.

**Background**

An Unspent Transaction Outputs (UTXO) model is a common blockchain account model. Currently, classification methods for a blockchain address of the UTXO model mainly include a heuristic algorithm, a change address recognition method, a text vectorization classification method, etc.

During implementation of the present disclosure, the inventors found that there are at least the following problems in the related art.

The heuristic algorithm needs to classify the blockchain address on the basis of a preset assumption, and once the assumption is not valid, it leads to poor accuracy of a classification result. The change address recognition method first needs to determine whether there is a change behavior, and then determines which address is a change address, such that there is a problem of error propagation, which may also lead to poor accuracy of the classification result. The text vectorization classification method is unable to accurately indicate dynamic changes in blockchain transactions, and is also unable to accurately indicate the relationship between the blockchain addresses, such that the classification result is also not accurate enough.

To sum up, the accuracy of current blockchain address classification methods is relatively low, such that there is an urgent need for a method for accurately classifying blockchain addresses.

**Summary**

In view of this, embodiments of the present disclosure provide a method and apparatus for classifying a blockchain address, which are able to construct a corresponding transaction bipartite graph according to blockchain transaction information, obtain an address vector of a transaction address according to the transaction bipartite graph and a graph embedding algorithm, and then use the address vector as an input of an address classifier, so as to classify the transaction address on a blockchain by using the address classifier. Therefore, the blockchain does not need to be classified on the basis of a preset assumption, and a change behavior and a change address do not need to be determined as well, such that the problem of error propagation is solved. In addition, dynamic changes in blockchain transactions may be adapted by constructing the transaction bipartite graph on the basis of the blockchain transaction information. Further, the address vector of the transaction address is obtained according to the graph embedding algorithm and the transaction bipartite graph, the relationship between blockchain addresses is also accurately described, such that the classification accuracy of the blockchain addresses, especially the blockchain addresses of a UTXO model is improved.

In order to implement the above objective, an aspect of an embodiment of the present disclosure provides a method for classifying a blockchain address, which includes: acquiring blockchain transaction information. The blockchain transaction information indicates one or more transaction input addresses and one or more transaction output addresses.

A transaction bipartite graph corresponding to the blockchain transaction information is constructed.

Address vectors respectively corresponding to the one or more transaction input addresses and the one or more transaction output addresses are obtained according to the transaction bipartite graph and a graph embedding algorithm.

The address vectors are used as inputs of an address classifier, so as to classify the one or more transaction input addresses and/or the one or more transaction output addresses by the address classifier.

As at least one alternative embodiment, the blockchain transaction information further indicates a transaction identifier. The operation of constructing the transaction bipartite graph corresponding to the blockchain transaction information includes the following operations.

A first vertex subset is constructed according to the one or more transaction input addresses and the transaction identifier, and a second vertex subset is constructed according to the one or more transaction output addresses and the transaction identifier.

An edge between the first vertex subset and the second vertex subset is constructed according to a transaction input address and a transaction output address which correspond to the same transaction identifier indicated by the blockchain transaction information, so as to form the transaction bipartite graph by the first vertex subset, the second vertex subset, and the edge.

As at least one alternative embodiment, the operation of constructing the edge between the first vertex subset and the second vertex subset includes the following operation.

For each transaction identifier, the following operations are executed.

A first address vertex and a first identifier vertex, which correspond to the transaction identifier, are determined in the first vertex subset, and a second address vertex and a second identifier vertex, which correspond to the transaction identifier, are determined in the second vertex subset.

An edge between the first address vertex and the second identifier vertex is constructed, and an edge between the second address vertex and the first identifier vertex is constructed.

As at least one alternative embodiment, the operation of obtaining, according to the transaction bipartite graph and the graph embedding algorithm, the address vectors respectively corresponding to the one or more transaction input addresses and the one or more transaction output addresses includes the following operations.

The connection probability that any one of vertexes in the transaction bipartite graph is connected to another vertex in the transaction bipartite graph is determined according to the edge connected to each vertex in the transaction bipartite graph and a preset walk direction parameter, and a transition probability matrix is formed according to the connection probability.

A walk sequence set respectively corresponding to one or more vertexes is generated according to the transition probability matrix.

Gradient descent optimization is performed on the graph embedding algorithm according to the walk sequence set.

The address vector corresponding to each address vertex in the transaction bipartite graph is generated according to an optimization result.

As at least one alternative embodiment, the operation of generating, according to the transition probability matrix, the walk sequence set respectively corresponding to the one or more vertexes includes the following operations.

For each current vertex of the walk sequence set to be generated: the current vertex is used as a first-row-column bit of the walk sequence set.

The following steps are circularly executed, until the number of generated walk sequences is not less than a preset sequence sampling number. A walk sampling sequence corresponding to the current vertex is generated according to a preset walk length and the transition probability matrix, and vertexes other than the current vertex as the current vertexes are selected from the transaction bipartite graph.

The walk sequence set is generated according to a selected sequence of each current vertex, and the walk sampling sequence corresponding to each current vertex.

As at least one alternative embodiment, the operation of generating the walk sampling sequence corresponding to the current vertex according to the preset walk length and the transition probability matrix includes the following operations.

The current vertex is used as a first bit of the walk sampling sequence.

The following steps are circularly executed, until the number of vertex bits is not less than the walk length.

A vertex with the highest connection probability to the current vertex is selected as a next vertex of the walk sampling sequence according to the transition probability matrix, and the next vertex is used as the current vertex.

As at least one alternative embodiment, the graph embedding algorithm includes any one of the following: a node2vec algorithm, a DeepWalk algorithm, a SocialGCN algorithm, and an SDNE algorithm.

As at least one alternative embodiment, the operation of, when the graph embedding algorithm is the node2vec algorithm, performing gradient descent optimization on the graph embedding algorithm according to the walk sequence set includes the following operation.

For each vertex in the transaction bipartite graph, the following operations are executed.

A target walk sampling sequence is determined from one or more walk sequence sets, and a first bit of the target walk sampling sequence is the vertex.

According to a preset neighborhood-sampling policy and the target walk sampling sequence, a neighborhood vertex set corresponding to the vertex is determined.

One-hot vectors respectively corresponding to the neighborhood vertexes in the neighborhood vertex set are determined according to the vertex, and the one-hot vectors are used as inputs of the node2vec algorithm, so as to obtain probabilities corresponding to the neighborhood vertexes.

The node2vec algorithm is optimized according to the probabilities corresponding to the neighborhood vertexes, so as to enable the probabilities corresponding to the neighborhood vertexes to be maximized.

As at least one alternative embodiment, the operation of generating, according to the optimization result, the address vector corresponding to each address vertex in the transaction bipartite graph includes the following operation.

An embedding vector corresponding to the one-hot vector is obtained according to the optimization result of the node2vec algorithm, and the embedding vector is used as the address vector.

As at least one alternative embodiment, the operation of constructing the transaction bipartite graph corresponding to the blockchain transaction information includes the following operations.

The blockchain transaction information is analyzed to obtain transaction amounts respectively corresponding to the one or more transaction input addresses and the one or more transaction output addresses.

The one or more transaction input addresses and the one or more transaction output addresses are filtered when a corresponding transaction amount is less than a preset amount threshold.

The transaction bipartite graph is constructed according to the filtered transaction input addresses and the filtered transaction output addresses.

As at least one alternative embodiment, the address classifier is trained on the basis of a plurality of address vectors corresponding to the blockchain transaction information, and labels respectively corresponding to the plurality of address vectors. The plurality of address vectors are obtained according to the graph embedding algorithm.

As at least one alternative embodiment, the blockchain address is a blockchain address based on a UTXO model.

A second aspect of an embodiment of the present disclosure provides an apparatus for processing an access request, which includes: an information acquisition module, a construction module, a vector determination module, and an address classification module.

The information acquisition module is configured to acquire blockchain transaction information. The blockchain transaction information indicates one or more transaction input addresses and one or more transaction output addresses.

The construction module is configured to construct a transaction bipartite graph corresponding to the blockchain transaction information.

The vector determination module is configured to obtain, according to the transaction bipartite graph and a graph embedding algorithm, address vectors respectively corresponding to the one or more transaction input addresses and the one or more transaction output addresses.

The address classification module is configured to use the address vectors as inputs of an address classifier, so as to classify the one or more transaction input addresses and/or the one or more transaction output addresses by the address classifier.

A third aspect of an embodiment of the present disclosure provides a server, which includes:

one or more processors, and a storage apparatus.

The storage apparatus is configured to store one or more programs.

When the one or more programs are executed by the one or more processors, the one or more processors are enabled to implement any one of the methods in the method for classifying the blockchain address described in the first aspect.

A fourth aspect of an embodiment of the present disclosure provides a computer-readable medium, which has a computer program stored thereon. When the program is executed by a processor, any one of the methods in the method for classifying the blockchain address described in the first aspect is implemented.

Further effects of non-customary optional methods are described below in combination with specific implementations.

## Brief Description of the Drawings

Drawings are used to better understand the present disclosure, and are not intended to improperly limit the present disclosure. Where:

Fig. 1 is a schematic diagram of main processes of a method for classifying a blockchain address according to an embodiment of the present disclosure.

Fig. 2 is a schematic diagram of blockchain transaction information according to an embodiment of the present disclosure.

Fig. 3 is a schematic diagram of a transaction bipartite graph corresponding to a transaction identifier M001 according to an embodiment of the present disclosure.

Fig. 4 is a schematic diagram of another transaction bipartite graph according to an embodiment of the present disclosure.

Fig. 5 is a schematic diagram of main modules of an apparatus for classifying a blockchain address according to an embodiment of the present disclosure.

Fig. 6 is an architecture diagram of an exemplary system to which an embodiment of the present disclosure may be applied.

Fig. 7 is a schematic structural diagram of a computer system of a terminal device or a server that adapts to implement the embodiments of the present disclosure.

## Detailed Description of the Embodiments

Exemplary embodiments of the present disclosure are described in detail below with reference to the drawings, including various details of the embodiments of the present disclosure to facilitate understanding, and should be regarded as merely exemplary. Thus, those of ordinary skill in the art shall understand that, variations and modifications can be made on the embodiments described herein, without departing from the scope and spirit of the present disclosure. Likewise, for clarity and conciseness, descriptions of well-known functions and structures are omitted in the following description.

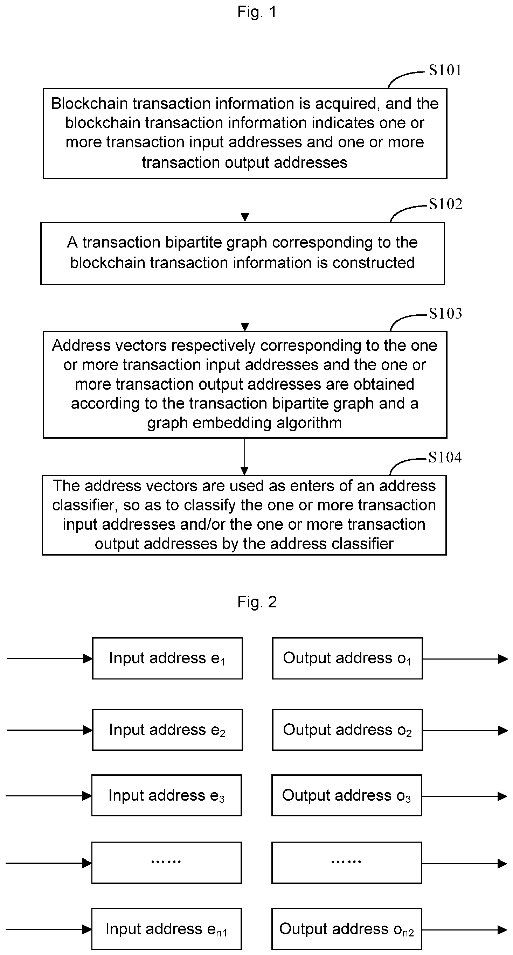

Fig. 1 shows a method for classifying a blockchain address according to an embodiment of the present disclosure. As shown in Fig. 1, the method mainly includes S101 to S104.

At S101, blockchain transaction information is acquired, and the blockchain transaction information indicates one or more transaction input addresses and one or more transaction output addresses.

In the embodiment of the present disclosure, the blockchain transaction information may be transaction information on a blockchain based on a UTXO model. For example, blockchain addresses in the blockchain of the UTXO model are classified; first, transaction information in the blockchain may be downloaded by full blockchain nodes installing and deploying the UTXO model; and the transaction information on the blockchain of the UTXO model may be shown in Fig. 2. It is understandable that, in the transaction information on the blockchain of the UTXO model, the number of input addresses and the number of output addresses may be the same or different, that is to say, n1 and n2 in Fig. 2 may or may not be equal.

It is understandable that, a basic construction unit in a blockchain transaction of the UTXO model is a transaction output, and the full nodes of the blockchain are able to track all outputs that may be found and used, which are called "Unspent Transaction Outputs (UTXO)". If a plurality of transaction input addresses and transaction output addresses are simultaneously included in one transaction, a transaction identifier of the transaction, and all the transaction input addresses, input amounts, transaction output addresses and output amounts, which are included in the transaction, may be acquired by analyzing transaction information. The transaction identifier is represented by generally using the hash of the transaction.

In an embodiment of the present disclosure, after the blockchain transaction information is analyzed to obtain transaction amounts respectively corresponding to the transaction input address and the transaction output address, if the transaction amount is less than a preset amount threshold, the transaction input addresses and the transaction output addresses are filtered; and then the transaction bipartite graph is constructed according to the filtered transaction input address and the filtered transaction output address.

This is because many small transactions are of a testing nature; and if transaction input addresses and transaction output addresses, which correspond to these small transactions, are also used as vertexes in the transaction bipartite graph when the transaction bipartite graph is constructed, interference may be caused to subsequent classification of blockchain addresses. For example, if the transaction input addresses and the transaction output addresses, which correspond to these small transactions, have similar features with some non-exchange address, during subsequent classification, these transaction input addresses and transaction output addresses are classified as non-exchange categories. However, these transaction input addresses and transaction output addresses are actually only test addresses, which do not correspond to real non-exchange entities, resulting in interference to classification results of blockchain addresses, leading to reduction in accuracy of the classification results. Therefore, in the embodiment, the transaction input addresses and the transaction output addresses, which correspond to these small transactions, are filtered, such that the transaction input addresses and the transaction output addresses do not appear in the transaction bipartite graph. In an aspect, the stability and accuracy of the blockchain address classification results are guaranteed; in another aspect, the efficiency if blockchain classification is also improved.

At S102, a transaction bipartite graph corresponding to the blockchain transaction information is constructed.

In the embodiment of the present disclosure, an example implementation of S102 may include: constructing a first vertex subset according to the one or more transaction input addresses and the transaction identifier, and constructing a second vertex subset according to the one or more transaction output addresses and the transaction identifier; and constructing an edge between the first vertex subset and the second vertex subset according to a transaction input address and a transaction output address which correspond to the same transaction identifier indicated by the blockchain transaction information, so as to form the transaction bipartite graph by the first vertex subset, the second vertex subset, and the edge.

In order to further reduce the amount of data processing during blockchain address classification, so as to improve the efficiency of blockchain address classification, in the embodiment of the present disclosure, the edge between fixed points in the transaction bipartite graph may be constructed by using the following manners.

For each transaction identifier, the following operations are executed.

A first address vertex and a first identifier vertex, which correspond to the transaction identifier, are determined in the first vertex subset, and a second address vertex and a second identifier vertex, which correspond to the transaction identifier, are determined in the second vertex subset.

An edge between the first address vertex and the second identifier vertex is constructed, and an edge between the second address vertex and the first identifier vertex is constructed.

Using the transaction information shown in Fig. 2 as an example, if an input address $e_1$, an input address $e_2$, an input address e3, an output address $o_1$, and an output address $o_2$ correspond to the same transaction, with a transaction identifier being M001. When the transaction bipartite graph is constructed, the input address $e_1$, the input address $e_2$, the input address $e_3$, and the transaction identifier M001 are used as the first vertex subsets of the transaction bipartite graph; the output address $o_1$, the output address $o_2$, and the transaction identifier M001 are used as the second vertex subsets of the transaction bipartite graph; and the first vertex subsets and the second vertex subsets form the vertexes of the transaction bipartite graph.

Then, according to the fact that the transaction input address corresponding to the same transaction identifier is connected to the transaction identifier of the transaction input address, and the transaction output address is connected to the transaction identifier of the transaction output address, edges between the first vertex subsets and the second vertex subsets are constructed. That is, the transaction bipartite graph formed by the first vertex subsets, the second vertex subsets, and the edges between the first vertex subsets and the second vertex subsets, is formed.

Still using the transaction identifier M001 as an example, in the first vertex subsets, second address vertexes corresponding to the transaction identifier M001 are vertexes, which respectively correspond to the input address $e_1$, the input address $e_2$, and the input address $e_3$, which are recorded as a vertex $e_1$, a vertex $e_2$, and a vertex $e_3$ in the example. A first identifier vertex determined in the first vertex subsets is recorded as a vertex M001. In the second vertex subsets, the second address vertexes corresponding to the transaction identifier M001 are vertexes, which respectively correspond to the output address $o_1$ and the output address $o_2$, which are recorded as a vertex $o_1$ and a vertex $o_2$ in the example. A second identifier vertex determined in the second vertex subsets is recorded as a vertex M001.

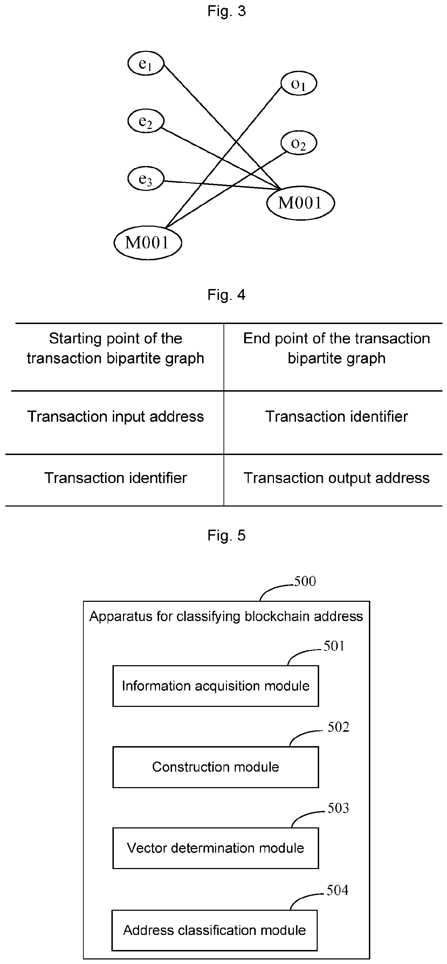

Then, the vertex e1, the vertex e2, and the vertex e3 are respectively connected to M001 in the second vertex subsets, and the vertex o1 and the vertex o2 are respectively connected to M001 in the first vertex subsets, so as to form the transaction bipartite graph corresponding to the transaction identifier M001. The example of the transaction bipartite graph corresponding to the transaction identifier M001 may be shown in Fig. 3.

It is understandable that, for transactions corresponding to other transaction identifiers, the corresponding transaction bipartite graph may also be generated by using the above method. Therefore, the transaction bipartite graph corresponding to each transaction identifier may form an entire transaction bipartite graph corresponding to the transaction information in the blockchain. In the constructed transaction bipartite graph corresponding to the transaction information, all the transaction input addresses are mapped to starting points of the transaction bipartite graph, and end points are the transaction identifiers corresponding to the end points. All the transaction output addresses are mapped to ends of the transaction bipartite graph, and starting points are the transaction identifiers corresponding to the starting points. The schematic diagram of the corresponding transaction bipartite graph is shown in Fig. 4.

Therefore, for the transaction information including a transaction input addresses and b transaction output addresses, in the transaction bipartite graph corresponding to the transaction information, the number of the edges is a+b. Compared with the method of directly mapping the transaction input addresses and the transaction output addresses of each transaction to starting points and end points of the transaction bipartite graph, and constructing edges between the starting points and the end points so as to generate the transaction bipartite graph (in the transaction bipartite graph generated by the method, the number of the edges is a*b), in the method for generating the transaction bipartite graph provided in the embodiment of the present disclosure, the number of the edges generated is greatly reduced, such that the amount of data processing during subsequent generation of address vectors is reduced, thereby facilitating reduction in the amount of data processing during blockchain address classification, and improving the classification efficiency of the blockchain addresses.

At S103, address vectors respectively corresponding to the one or more transaction input addresses and the one or more transaction output addresses are obtained according to the transaction bipartite graph and a graph embedding algorithm.

It is understandable that, when the blockchain is a blockchain based on the UTXO model, the transaction input addresses and the transaction output addresses are blockchain addresses of the UTXO model. In the embodiment of the present disclosure, the graph embedding algorithm includes any one of the following: a node2vec algorithm, a DeepWalk algorithm, a SocialGCN algorithm, and an SDNE algorithm. It is understandable that, different graph embedding algorithms may all generate corresponding address vectors according to the transaction bipartite graph, and the type of the graph embedding algorithms is not limited in the solution.

In a preferred embodiment of the present disclosure, since the node2vec algorithm may not only map a graph model to a low-dimensional vector space, but also enable a represented vector form to reserve structural information and potential characteristics of the graph model as much as possible, the relationship between the blockchain addresses is accurately expressed. Therefore, in the example embodiment, the corresponding address vectors are generated according to the transaction bipartite graph by using the node2vec algorithm, so as to improve the accuracy of blockchain address classification.

Using the node2vec algorithm as an example, the process of generating the address vectors in the embodiment of the present disclosure is explained in detail.

In the embodiment of the present disclosure, the connection probability that any one of vertexes in the transaction bipartite graph is connected to another vertex in the transaction bipartite graph may be determined according to the edge connected to each vertex in the transaction bipartite graph and a preset walk direction parameter, and a transition probability matrix is formed according to the connection probability; a walk sequence set respectively corresponding to one or more vertexes is generated according to the transition probability matrix; gradient descent optimization is performed on the graph embedding algorithm according to the walk sequence set; and the address vector corresponding to each address vertex in the transaction bipartite graph is generated according to an optimization result.

When the graph embedding algorithm is the node2vec algorithm, the preset walk direction parameter is a return parameter p and an in-out parameter q, and p and q are generally set to an index of 2, for example, 1/2, 1/4, 1/2, 1, 2, 4, 8, or the like. Specific set values of p and q may be determined according to a final classification purpose. For example, if the blockchain addresses with similar structures are about to be classified into one category as much as possible, the value of p may be appropriately increased, for example, p is set to 1 or 2; and if the blockchain addresses with frequent transactions are classified into one category as much as possible, that is, the blockchain addresses with similar distances in the transaction bipartite graph are classified into one category as much as possible, the value of q may be appropriately increased.

After the return parameter p and the in-out parameter q are determined, the connection probability that each vertex $V_i$ is connected to another vertex $V_j$ in the transaction bipartite graph is determined according to the edge connected to each vertex in the transaction bipartite graph, and the return parameter p and the in-out parameter q. The connection probability represents the probability of traveling from $V_i$ to $V_j$, such that the transition probability matrix corresponding to the transaction bipartite graph may be obtained.

Then, the walk sequence set corresponding to the vertexes in the transaction bipartite graph may be generated according to the transition probability matrix. As an example, in the embodiment of the present disclosure, the walk sequence set corresponding to the current vertex may be generated according to the following manners: using the current vertex as a first-row-column bit of the walk sequence set; circularly executing the following steps, until the number of generated walk sequences is not less than a preset sequence sampling number: generating a walk sampling sequence corresponding to the current vertex according to a preset walk length and the transition probability matrix, and selecting, from the transaction bipartite graph, vertexes other than the current vertex as the current vertexes; and generating the walk sequence set according to a selected sequence of each current vertex, and the walk sampling sequence corresponding to each current vertex.

A sequence sampling number r is less than or equal to the total number of all vertexes in the transaction bipartite graph. That is to say, in the embodiment of the present disclosure, the walk sampling sequence corresponding to the vertex may be generated for each vertex in the transaction bipartite graph at most; and then the walk sequence set corresponding to the current vertex is further generated according to the walk sampling sequence. It is apparent that, the walk sampling sequence corresponding to the current vertex may at least directly used as the walk sequence set corresponding to the vertex.

In the embodiment of the present disclosure, the walk sampling sequence corresponding to the current vertex may be generated by using the following manners: using the current vertex as a first bit of the walk sampling sequence; and circularly executing the following step, until the number of vertex bits is not less than the walk length: selecting, according to the transition probability matrix, a vertex with the highest connection probability to the current vertex as a next vertex of the walk sampling sequence, and using the next vertex as the current vertex.

The form of the walk sampling sequence walk is $[e_1, e_2, e_3, ..., e_l]$; the current vertex $E_{curr}$ is used as the first bit of the walk sampling sequence, that is, $E_{curr}$ is used as $e_1$; and then, a vertex set $V_{curr}$ directly adjacent to $E_{curr}$ is acquired. A vertex $e_s$ with the highest connection probability to the current vertex may be rapidly determined according to the transition probability matrix and $V_{curr}$; and $e_s$ is used as a next vertex of $e_1$, that is, $e_s$ is added into the walk as

$e_2$. Then, $e_s$ is used as the current vertex, and so on, such that other vertexes in the walk sampling sequence may be obtained. When a preset sequence sampling number is I, the number of vertexes in the walk sampling sequence is I, such that, in addition to the current vertex, I-1 vertexes need to be found according to the transition probability matrix and added into the walk sampling sequence, so as to obtain the walk sampling sequence with $E_{curr}$ being the first bit, which is the walk sampling sequence corresponding to $E_{curr}$.

Then, the vertex other than $E_{curr}$ is randomly selected from the transaction bipartite graph and used as the current vertex again. For example, a vertex $V_x$ is selected from the transaction bipartite graph as the current vertex. A walk with a length being I is performed by using $V_x$ as a starting point by means of the above manner, and the walk sampling sequence corresponding to $V_x$ is also able to be obtained. And so on, the walk sampling sequences corresponding to other vertexes in the transaction bipartite graph may also be obtained.

When the walk sequence set walks is generated, the walks are first initialized into an empty set, and the walk sampling sequence walk is generated every time, the walk sampling sequence walk is added into the walks, so as to finally obtain the walk sequence set walks. In the walk sequence sets walks, the walk sampling sequences walk are sorted according to a sequence that the first bit vertexes of the walk sampling sequences are selected.

For example, the step of generating the walk sampling sequences is circularly executed for r times, such that r walk sampling sequences may be obtained; and after the walk sampling sequence walk is generated every time, the walk sampling sequence is added into the walks. Each walk sampling sequence walk is used as a row of the walk sequence set walks, and a walk length of each walk sampling sequence walk is I; and then the walk sequence set consisting of r walk sampling sequences is a matrix of r*I. Using the walk sequence set corresponding to $E_{curr}$ as an example, in the walk sequence set, $E_{curr}$ is located at a first-row-column bit, that is, $E_{curr}$ is an element that is located at the first row and first column in the r*I matrix; and the walk sampling sequence corresponding to $E_{curr}$ is first row elements in the r*I matrix. Since $V_x$ is selected as the current vertex to generate the walk sampling sequence after $E_{curr}$ is used as the current vertex, the walk sampling sequence corresponding to Vx is used as second row elements in the r*I matrix; and so on, other rows in the walk sequence set walks are also arranged according to the selection sequence of the first bit vertex in each walk sequence set.

After the walk sequence set is generated, gradient descent optimization may be performed on the graph embedding algorithm according to the walk sequence set. For example, in the embodiment of the present disclosure, for each vertex in the transaction bipartite graph, the following operations may be executed: determining a target walk sampling sequence from one or more walk sequence sets, where a first bit of the target walk sampling sequence is the vertex; according to a preset neighborhood-sampling policy and the target walk sampling sequence, determining a neighborhood vertex set corresponding to the vertex; determining one-hot vectors respectively corresponding to the neighborhood vertexes in the neighborhood vertex set according to the vertex, using the one-hot vectors as inputs of the node2vec algorithm, so as to obtain probabilities corresponding to the neighborhood vertexes; and optimizing the node2vec algorithm according to the probabilities corresponding to the neighborhood vertexes, so as to enable the probabilities corresponding to the neighborhood vertexes to be maximized.

Then, an embedding vector corresponding to the one-hot vector may be obtained according to the optimization result of the node2vec algorithm, and the embedding vector is used as the address vector.

When the walk sequence set is generated, the walk sequence set corresponding to one or more vertexes may be generated. For example, the walk sequence set corresponding to each vertex in the transaction bipartite graph may be generated. Then, the target walk sampling sequence may be determined from each walk sequence set. The number of the target walk sampling sequences may be determined according to a preset training sample size k, that is, k target walk sampling sequences may be determined. For example, when k is 5, for the vertex $o_1$, 5 target walk sampling sequences may be determined, which respectively are $[o_1, o_{12}, e_{13}, M0011...e_{11}]$, $[o_1, e_{22}, e_{23}, M0021...o_{21}]$, $[o_1, e_{32}, e_{33}, M0031...e_{31}]$, $[o_1, o_{42}, o_{43}, M0041...e_{41}]$, $[o_1, o_{52}, e_{53}, M0051...e_{51}]$.

Then, sampling is performed from the target walk sampling sequences according to a preset neighborhood-sampling policy, so as to obtain a neighborhood vertex set corresponding to the vertex $o_1$. In an implementation of the present disclosure, the neighborhood vertex set corresponding to the vertex may be obtained by means of negative sampling on the basis of the generated walk sequence set. For example, results of sampling the target walk sampling sequences according to a domain sampling policy respectively are $[o_1, o_{12}, M0011...e_{11}]$, $[o_1, e_{23}, M0021...o_{21}]$, $[o_1, e_{32}, M0031...e_{31}]$, $[o_1, o_{42}, M0041...e_{41}]$, $[o_1, e_{53}, M0051...e_{51}]$, such that the sampling results may form the neighborhood vertex set corresponding to the vertex $o_1$.

Assuming that a one-hot vector of a vertex ui is $u_i$, in the neighborhood vertex set, the one-hot vector of the neighborhood vertex is $u_j$, the neighborhood vertex set is recorded as $N_s(u_i)$, and the prediction probability of $u_i$ for its own neighborhood vertex is $P(N_s(u_i)|u_i)$. By means of introducing a naive Bayes assumption, that is, at a given vertex, the probability of the appearance of the neighborhood vertex is unrelated to other vertexes in the neighborhood vertex set, such that a calculation manner of $P(N_s(u_i)|u_i)$ may be represented by the following equation (1):

$$P(N_s(u_i)|u_i) = \prod_{n_j \in N_s(ui)} P(n_j|u_i) \qquad (1)$$

The goal of performing gradient optimization on the node2vec algorithm is to maximize the probability corresponding to the neighborhood vertex for the vertex in the transaction bipartite graph. That is to say, $P(n_j|u_i)$ is expected to be as large as possible during gradient optimization, converting, according to the above equation (1), into a problem of how to solve $(n_j|u_i)$.

In the embodiment of the present disclosure, by means of introducing a function f, for the input one-hot vector being $u_i$, the function f may output the prediction probability $P(n_j|u_i)$ for the vertex $u_j$, such that the function f is a neural network to be trained during gradient optimization. For each vertex in the transaction bipartite graph, the probability of the appearance of the neighborhood vertex is the maximum, and a target function of a gradient optimization algorithm may be represented by the following equation (2):

$$\max_f \sum_{u_i \in V} log P(N_s(u_i)|f(u_i)) \qquad (2)$$

$u_i$ represents the ith vertex in the transaction bipartite graph; $f(u_i)$ is the mapping from the vertex $u_i$ to the address vector; $N_s(u_i)$ represents the neighborhood vertex set corresponding to the vertex $u_i$ determined on the basis of the neighborhood-sampling policy; and P represents the probability. The reason of using log in the equation (2) is that, a probability multiplication is converted into a probability addition, so as to achieve solution more conveniently while not affecting monotonicity.

f is solved by combining the equation (1) and the equation (2), and the obtained f is a parameter in a neural network structure corresponding to the node2vec algorithm. That is to say, the neural network structure of the node2vec algorithm is determined according to the gradient descent optimization result, such that the optimization of the node2vec algorithm is achieved. When a neural network of the node2vec algorithm is trained, the one-hot vector of each vertex in the transaction bipartite graph merely needs to be inputted into an input layer in the neural network, and propagated forwards to a hidden layer, such that an embedding vector Embedding corresponding to each vertex may be generated, and the Embedding vectors may be used as the address vectors respectively corresponding to the one or more transaction input addresses and the one or more transaction output addresses.

At S104, the address vectors are used as inputs of an address classifier, so as to classify the one or more transaction input addresses and/or the one or more transaction output addresses by the address classifier.

In the embodiment of the present disclosure, the address classifier is a supervised classifier. The address classifier may be trained in advance on the basis of a plurality of address vectors corresponding to the blockchain transaction information, and labels respectively corresponding to the plurality of address vectors. The address vectors used during training may also be obtained according to the graph embedding algorithm.

For example, the training process for the address classifier may be implemented by means of the following processes. Historical transaction input addresses and historical transaction output addresses are analyzed from historical transaction information according to the historical transaction information of blockchain; then the historical transaction input addresses and the historical transaction output addresses are classified and labeled, so as to determine labels respectively corresponding to the historical transaction input addresses and the historical transaction output addresses. For example, the labels may indicate whether it is an exchange, whether it is a malicious address, whether it is a high-risk address, and the like. Next, the transaction bipartite graph corresponding to the historical transaction information is obtained by using any one of methods for generating the transaction bipartite graph provided in the embodiment of the present disclosure; and the address vectors respectively corresponding to the historical transaction input addresses and the historical transaction output addresses are obtained on the basis of the graph embedding algorithm. Then, the address vectors corresponding to the classified and labeled blockchain addresses are classified into training data and test data in proportion; and the training data is inputted into the supervised classifier to complete the training of the supervised classifier, and training results of the supervised classifier are verified by means of the test data.

After being acquired in S101, the transaction input addresses and the transaction output addresses, which are to be classified, may be classified according to the trained address classifier. For example, these transactions input addresses and transaction output addresses are classified into a plurality of categories of exchanges, non-exchanges, malicious addresses, non-malicious addresses, high-risk addresses, and non-high-risk addresses (or normal addresses). Further, transactions of the blockchain addresses may be controlled according to the classification results. For example, when the transaction input address and/or output address is identified as the malicious address or the high-risk address, the transaction of the malicious address or the high-risk address may be limited or prevented.

To sum up, according to the method for classifying the blockchain address provided in the embodiment of the present disclosure, the corresponding transaction bipartite graph is able to be constructed according to the blockchain transaction information, and the address vector of the transaction address is obtained according to the transaction bipartite graph and the graph embedding algorithm; and then the address vector is used as an input of the address classifier, so as to classify the transaction address on the blockchain by using the address classifier. Therefore, the problems of various blockchain address classification methods in the related art are fully or partially solved.

For example, a heuristic algorithm in the related art needs to be based on an important assumption, that is, if there are a plurality of input addresses in one transaction at the same time, it is considered that these input addresses are from the same entity. In brief, different addresses transferring accounts to the same object are considered to be from one entity. More new addresses may be associated by radiating addresses that have been labeled, so as to achieve exponential growth of address label data volumes. There are two main problems in the heuristic algorithm. The first problem is that, when a basic assumption is not valid, for example, there are inputs of other entities in the same transaction, or there is a single input, address labeling results are no longer reliable; and the second problem is that the labeling of an initial address label has to be accurate, otherwise all results obtained through subsequent radiation are unreliable, that is, a slight move in one part may affect the situation as a whole.

A change address recognition method in the related art needs to traverse input addresses and output addresses of one transaction, and then determines, according to features of a change address, whether there is a change behavior and a change address in the transaction. After a plurality of times of traversing and rule verifications, the change address may finally be determined. There are also several problems in the change address recognition method. First, an algorithm needs to determine whether there is a change behavior, and then determines which address is the change address, such that there is a problem of error propagation; second, the algorithm is highly dependent to rules or assumptions, resulting in insufficient generalization of the algorithm; and third, a plurality of times of traversing need to be performed, such that requirements for hardware resources and time costs are higher.

A text vectorization classification method in the related art is unable to achieve an optimal result due to the following three problems. First, a text vectorization technology is a static vector method, in which a conversion function for calculating the blockchain addresses does not perform re-calculation with the addition of new addresses, such that old address vectors are unable to be updated, and dynamic changes in blockchain transactions cannot be accurately expressed; second, there is an obvious structural relationship between transactions of the blockchain addresses, however, the text vectorization technology is an embedding technology based on content, which cannot describe the structural relationship; and third, there are a plurality of inputs and outputs in one transaction due to the UTXO model, as opposed to the text vectorization technology that requires the inputs are of a sequential data structure, such that a specially designed conversion method is required to convert the data structure of the UTXO model into sequential data. To sum up, for the blockchain address classification problems that transaction rules are highly susceptible to external circumstances and there is an obvious structural relationship between the transactions, the text vectorization classification method will reduce the accuracy of address classification results.

According to the method for classifying the blockchain address provided in the embodiment of the present disclosure, the blockchain does not need to be classified on the basis of a preset assumption, and a change behavior and a change address do not need to be determined as well, such that the problem of error propagation is solved. In addition, dynamic changes in blockchain transactions may be adapted by constructing the transaction bipartite graph on the basis of the blockchain transaction information. Further, the address vector of the transaction address is obtained according to the graph embedding algorithm and the transaction bipartite graph is obtained, the relationship between blockchain addresses is also accurately described, such that the problems in the related art are solved, and the classification accuracy of the blockchain addresses, especially the blockchain addresses of a UTXO model, is improved.

In addition, a first vertex subset corresponding to the transaction bipartite graph is constructed according to the transaction input address and the transaction identifier, and a second vertex subset corresponding to the transaction bipartite graph is constructed according to the transaction output address and the transaction identifier; and for a first address vertex and a first identifier vertex, and a second address vertex and a second identifier vertex, which respectively correspond to the same transaction identifier, in the first vertex subset and the second vertex subset, an edge between the first address vertex and the second identifier vertex is constructed, and an edge between the second address vertex and the first identifier vertex is constructed. Therefore, the number of the edges in the transaction bipartite graph may be reduced, so as to reduce the amount of data processing during classification, thereby improving the classification efficiency of the blockchain addresses.

Fig. 5 shows an apparatus for classifying a blockchain address according to an embodiment of the present disclosure. As shown in Fig. 5, the apparatus for classifying the blockchain address includes an information acquisition module 501, a construction module 502, a vector determination module 503, and an address classification module 504.

The information acquisition module 501 is configured to acquire blockchain transaction information. The blockchain transaction information indicates one or more transaction input addresses and one or more transaction output addresses.

The construction module 502 is configured to construct a transaction bipartite graph corresponding to the blockchain transaction information.

The vector determination module 503 is configured to obtain, according to the transaction bipartite graph and a graph embedding algorithm, address vectors respectively corresponding to the one or more transaction input addresses and the one or more transaction output addresses.

The address classification module 504 is configured to use the address vectors as inputs of an address classifier, so as to classify the one or more transaction input addresses and/or the one or more transaction output addresses by the address classifier.

In an embodiment of the present disclosure, the blockchain transaction information further indicates a transaction identifier. The construction module 502 is configured to construct a first vertex subset according to the one or more transaction input addresses and the transaction identifier, and construct a second vertex subset according to the one or more transaction output addresses and the transaction identifier; and construct an edge between the first vertex subset and the second vertex subset according to a transaction input address and a transaction output address which correspond to the same transaction identifier indicated by the blockchain transaction information, so as to form the transaction bipartite graph by the first vertex subset, the second vertex subset, and the edge.

In an embodiment of the present disclosure, the construction module 502 is configured to, for each transaction identifier, execute the following: determining, in the first vertex subset, a first address vertex and a first identifier vertex, which correspond to the transaction identifier, and determining, in the second vertex subset, a second address vertex and a second identifier vertex, which correspond to the transaction identifier; and constructing an edge between the first address vertex and the second identifier vertex, and construct an edge between the second address vertex and the first identifier vertex.

In an embodiment of the present disclosure, the vector determination module 503 is configured to determine, according to the edge connected to each vertex in the transaction bipartite graph and a preset walk direction parameter, the connection probability that any one of vertexes in the transaction bipartite graph is connected to another vertex in the transaction bipartite graph, and form a transition probability matrix according to the connection probability; generate, according to the transition probability matrix, a walk sequence set respectively corresponding to one or more vertexes; perform gradient descent optimization on the graph embedding algorithm according to the walk sequence set; and generate, according to an optimization result, the address vector corresponding to each address vertex in the transaction bipartite graph.

In an embodiment of the present disclosure, the vector determination module 503 is configured to, for each current vertex of the walk sequence set to be generated, use the current vertex as a first-row-column bit of the walk sequence set; circularly execute the following steps, until the number of generated walk sequences is not less than a preset sequence sampling number: according to a preset walk length and the transition probability matrix, generating a walk sampling sequence corresponding to the current vertex, and selecting, from the transaction bipartite graph, vertexes other than the current vertex as the current vertexes; and generating the walk sequence set according to a selected sequence of each current vertex, and the walk sampling sequence corresponding to each current vertex.

In an embodiment of the present disclosure, the vector determination module 503 is configured to use the current vertex as a first bit of the walk sampling sequence; and circularly execute the following step, until the number of vertex bits is not less than the walk length: selecting, according to the transition probability matrix, a vertex with the highest connection probability to the current vertex as a next vertex of the walk sampling sequence, and using the next vertex as the current vertex.

In an embodiment of the present disclosure, the graph embedding algorithm includes any one of the following: a node2vec algorithm, a DeepWalk algorithm, a SocialGCN algorithm, and an SDNE algorithm.

In an embodiment of the present disclosure, when the graph embedding algorithm is the node2vec algorithm, the vector determination module 503 is configured to, for each vertex in the transaction bipartite graph, execute the following: determining a target walk sampling sequence from one or more walk sequence sets, wherein a first bit of the target walk sampling sequence is the vertex; according to a preset neighborhood-sampling policy and the target walk sampling sequence, determining a neighborhood vertex set corresponding to the vertex; determining one-hot vectors respectively corresponding to the neighborhood vertexes in the neighborhood vertex set according to the vertex; using the one-hot vectors as inputs of the node2vec algorithm, so as to obtain probabilities corresponding to the neighborhood vertexes; and optimizing the node2vec algorithm according to the probabilities corresponding to the neighborhood vertexes, so as to enable the probabilities corresponding to the neighborhood vertexes to be maximized.

In an embodiment of the present disclosure, the vector determination module 503 is configured to obtain, according to the optimization result of the node2vec algorithm, an embedding vector corresponding to the one-hot vector, and use the embedding vector as the address vector.

In an embodiment of the present disclosure, the construction module 502 is configured to analyze the blockchain transaction information to obtain transaction amounts respectively corresponding to the one or more transaction input address and transaction amounts respectively corresponding to the one or more transaction output address; filter the one or more transaction input address and the one or more transaction output address when a corresponding transaction amount is less than a preset amount threshold; and construct the transaction bipartite graph according to the filtered transaction input address and the filtered transaction output address.

In an embodiment of the present disclosure, the address classifier is trained on the basis of a plurality of address vectors corresponding to the blockchain transaction information, and labels respectively corresponding to the plurality of address vectors, wherein the plurality of address vectors are obtained according to the graph embedding algorithm.

In an embodiment of the present disclosure, the blockchain address is a blockchain address based on a UTXO model.

According to the apparatus for classifying the blockchain address provided in the embodiment of the present disclosure, the corresponding transaction bipartite graph is able to be constructed according to the blockchain transaction information, and the address vector of the transaction address is obtained according to the transaction bipartite graph and the graph embedding algorithm; and then the address vector is used as an input of the address classifier, so as to classify the transaction address on the blockchain by using the address classifier. Therefore, the blockchain does not need to be classified on the basis of a preset assumption, and a change behavior and a change address do not need to be determined as well, such that the problem of error propagation is solved. In addition, dynamic changes in blockchain transactions may be adapted by constructing the transaction bipartite graph on the basis of the blockchain transaction information. Further, the address vector of the transaction address is obtained according to the graph embedding algorithm and the transaction bipartite graph is obtained, the relationship between blockchain addresses is also accurately described, such that the problems in the related art are solved, and the classification accuracy of the blockchain addresses, especially the blockchain addresses of a UTXO model is improved.

In addition, a first vertex subset corresponding to the transaction bipartite graph is constructed according to the transaction input address and the transaction identifier, and a second vertex subset corresponding to the transaction bipartite graph is constructed according to the transaction output address and the transaction identifier; and for a first address vertex and a first identifier vertex, and a second address vertex and a second identifier vertex, which respectively correspond to the same transaction identifier, in the first vertex subset and the second vertex subset, an edge between the first address vertex and the second identifier vertex is constructed, and an edge between the second address vertex and the first identifier vertex is constructed. Therefore, the number of the edges in the transaction bipartite graph may be reduced, so as to reduce the amount of data processing during classification, thereby improving the classification efficiency of the blockchain addresses.

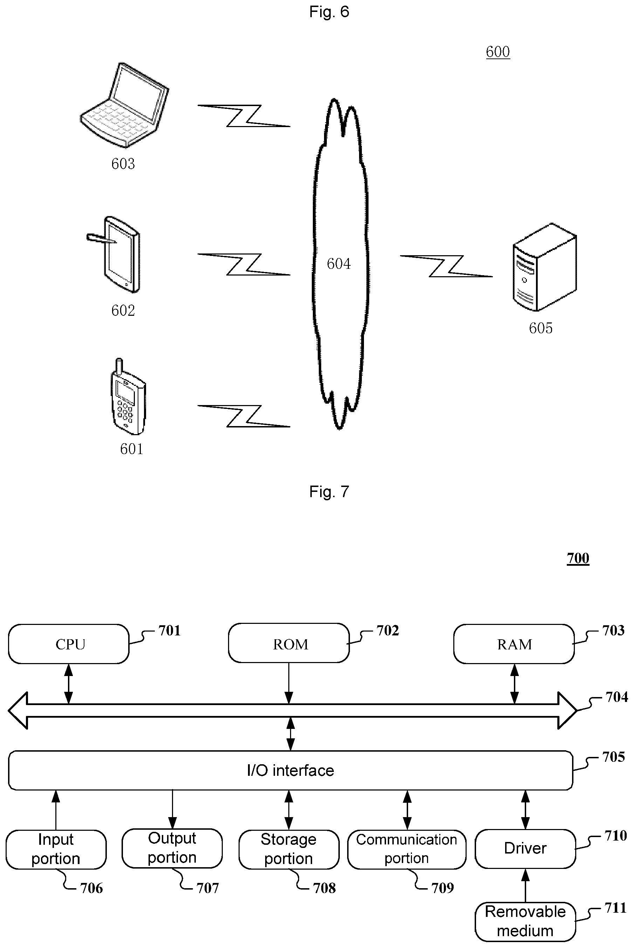

Fig. 6 is an exemplary system architecture 600 that may use the method for classifying the blockchain address or the apparatus for classifying the blockchain address according to the embodiments of the present disclosure.

As shown in Fig. 6, a system architecture 600 may include terminal devices 601, 602 and 603, a network 604 and a server 605. The network 604 is configured to provide a medium for communication links between the terminal devices 601, 602 and 603 and the server 605. The network 604 may include various connection types, such as wired or wireless communication links, or fiber optic cables.

A user may use the terminal devices 601, 602 and 603 to interact with the server 605 by means of the network 604, so as to receive or sent a message. Various communication client applications, such as shopping applications, web browser applications, search applications, instant messaging tools, email clients, social platform software, etc., may be installed on the terminal devices 601, 602 and 603.

The terminal devices 601, 602 and 603 may be a variety of electronic devices having a display screen and supporting web browsing, including, but is not limited to, smartphones, tablets, laptops, desktops, and the like.

The server 605 may be a server that provides various services, for example, a background management server that provides support for transactions performed by a user by means of the terminal devices 601, 602 and 603. The background management server may perform analysis and other processing on received data such as a product information query request, and feed back a processing result (for example, a transaction result) to the terminal device.

It is to be noted that, the method for classifying the blockchain address provided in the embodiments of the present disclosure is generally executed by the server 605, and accordingly, the apparatus for classifying the blockchain address is generally provided in the server 605.

It should be understood that, the number of the terminal devices, the networks and the servers in Fig. 6 is merely schematic. According to an implementation requirement, the terminal device, the network and the server may be in any number.

Fig. 7 is a schematic structural diagram of a computer system 700 of a terminal device that adapts to implement the embodiments of the present disclosure. The terminal device shown in Fig. 7 is only an example, and should not impose any limitations on the functionality and scope of use of embodiments of the present disclosure.

As shown in Fig. 7, the computer system 700 includes a Central Processing Unit (CPU) 701. The CPU may perform various appropriate actions and processing operations according to a program stored in a Read-Only Memory (ROM) 702 or a computer program loaded from a storage portion 708 into a Random Access Memory (RAM) 703. In the RAM 703, various programs and data required for the operation of the system 700 may also be stored. The CPU 701, the ROM 702, and the RAM 703 are connected to each other by means of a bus 704. An Input/Output (I/O) interface 705 is also connected to the bus 704.

The following components are connected to the I/O interface 705: an input portion 706 including a keyboard, a mouse, etc.; an output portion 707 including a Cathode Ray Tube (CRT), a Liquid Crystal Display (LCD), a speaker, etc.; a storage portion 708 including a hard disk, etc.; and a communication portion 709 including a network interface card such as a Local Area Network (LAN) card and a modem. The communication portion 709 performs communication processing via a network such as Internet. A driver 710 is also connected to the I/O interface 705 as needed. A removable medium 711, such as a magnetic disk, an optical disk, a magneto-optical disk, and a semiconductor memory, is installed on the driver 710 as needed, such that a computer program read therefrom is installed into the storage portion 708 as needed.

In particular, the process described above with reference to a flowchart may be implemented as a computer software program according to the disclosed embodiments of the present disclosure. For example, the disclosed embodiments of the present disclosure include a computer program product including a computer program carried on a computer-readable medium, and the computer program includes a program code for executing the method shown in the flowchart. In such an embodiment, the computer program may be downloaded and installed from the network via the communication portion 709, and/or from the removable medium 711. The computer program is executed by the CPU 701 to execute the functions limited in the system of the present disclosure.

It is to be noted that, the computer-readable medium shown in the present disclosure may be a computer-readable signal medium or a computer-readable storage medium or any combination thereof. The computer-readable storage medium, for example, may be, but not limited to, an electrical, magnetic, optical, electromagnetic, infrared, or semiconductor system, apparatus or device, or a combination of any of the above. More specific examples of the computer-readable storage medium may include, but are not limited to, an electrical connection member including one or more wires, a portable computer disk, a hard disk, an RAM, an ROM, an Erasable Programmable Read-Only Memory (EPROM), a flash memory, optical fiber, a portable Compact Disc Read-Only Memory (CD-ROM), an optical storage device, a magnetic storage device, or any appropriate combination thereof. In the present disclosure, the computer-readable storage medium may be any tangible medium that includes or stores a program. The program may be used by or in combination with an instruction execution system, an apparatus, or a device. In the present disclosure, the computer-readable signal medium may include a data signal that is propagated in a base band or propagated as a part of a carrier wave, which carries a computer-readable program code therein. The propagated data signal may adopt a plurality of forms including, but not limited to, an electromagnetic signal, an optical signal, or any suitable combination of the above. The computer-readable signal medium may also be any computer-readable medium other than the computer-readable storage medium. The computer-readable medium may send, propagate or transmit the program that is used by or in combination with the instruction execution system, the apparatus, or the device. The program code in the computer-readable medium may be transmitted with any proper medium, including, but not limited to, radio, a wire, an optical cable, Radio Frequency (RF), etc., or any proper combination thereof.

The flowcharts and block diagrams in the drawings illustrate probably implemented system architectures, functions, and operations of the system, method, and computer program product according to various embodiments of the present disclosure. On this aspect, each block in the flowcharts or block diagrams may represent a module, a program segment, or a portion of a code, which includes one or more executable instructions for implementing the specified logic functions. It is also to be noted that, in certain alternative implementations, the functions marked in the blocks may also be realized in a sequence different from those marked in the drawings. For example, two blocks shown in succession may, in fact, be executed substantially in parallel, and sometimes in a reverse sequence, depending upon the functionality involved. It is further to be noted that, each block in the block diagrams or the flowcharts and a combination of the blocks in the block diagrams or the flowcharts may be implemented by a dedicated hardware-based system configured to execute a specified function or operation, or may be implemented by a combination of special hardware and a computer instruction.

The modules described in the embodiments of the present disclosure may be implemented by means of software or hardware. The modules described may also be provided in a processor, for example, a processor may be described as including an information acquisition module, a construction module, a vector determination module, and an address classification module. The names of the modules do not constitute a limitation on the module itself in some cases, for example, the information acquisition module may also be described as "a module unit configured to acquire blockchain transaction information".

As another aspect, the present disclosure further provides a computer-readable medium, which may be included in the device described in the above embodiments, or may also be present separately and not fitted into the device. The computer-readable medium carries one or more programs. When the one or more programs are executed by the device, the device is enabled to include performing the following operation: acquiring blockchain transaction information, where the blockchain transaction information indicates one or more transaction input addresses and one or more transaction output addresses; constructing a transaction bipartite graph corresponding to the blockchain transaction information; obtaining, according to the transaction bipartite graph and a graph embedding algorithm, address vectors respectively corresponding to the one or more transaction input addresses and the one or more transaction output addresses; and

using the address vectors as inputs of an address classifier, so as to classify the one or more transaction input addresses and/or the one or more transaction output addresses by the address classifier.

According to the technical solutions in the embodiments of the present disclosure, the corresponding transaction bipartite graph is able to be constructed according to the blockchain transaction information, and the address vector of the transaction address is obtained according to the transaction bipartite graph and the graph embedding algorithm; and then the address vector is used as the input of the address classifier, so as to classify the transaction address on the blockchain by using the address classifier. Therefore, the blockchain does not need to be classified on the basis of a preset assumption, and a change behavior and a change address do not need to be determined as well, such that the problem of error propagation is solved. In addition, dynamic changes in blockchain transactions may be adapted by constructing the transaction bipartite graph on the basis of the blockchain transaction information. Further, the address vector of the transaction address is obtained according to the graph embedding algorithm and the transaction bipartite graph is obtained, the relationship between blockchain addresses is also accurately described, such that the classification accuracy of the blockchain addresses, especially the blockchain addresses of a UTXO model is improved.

The foregoing specific implementations do not constitute limitations on the protection scope of the present disclosure. Those skilled in the art should understand that, various modifications, combinations, sub-combinations and substitutions may be made according to design requirements and other factors. Any modifications, equivalent replacements, improvements and the like made within the spirit and principle of the present disclosure shall fall within the scope of protection of the present disclosure.

**Claims**

1. A method for classifying a blockchain address, comprising:

acquiring blockchain transaction information, wherein the blockchain transaction information indicates one or more transaction input addresses and one or more transaction output addresses;
constructing a transaction bipartite graph corresponding to the blockchain transaction information;
obtaining, according to the transaction bipartite graph and a graph embedding algorithm, address vectors respectively corresponding to the one or more transaction input addresses and the one or more transaction output addresses; and
using the address vectors as inputs of an address classifier, so as to classify the one or more transaction input addresses and/or the one or more transaction output addresses by the address classifier.

2. The method as claimed in claim 1, wherein the blockchain transaction information further indicates a transaction identifier; and constructing the transaction bipartite graph corresponding to the blockchain transaction information comprises:

constructing a first vertex subset according to the one or more transaction input addresses and the transaction identifier, and constructing a second vertex subset according to the one or more transaction output addresses and the transaction identifier; and
constructing an edge between the first vertex subset and the second vertex subset according to a transaction input address and a transaction output address which correspond to the same transaction identifier indicated by the blockchain transaction information, so as to form the transaction bipartite graph by the first vertex subset, the second vertex subset, and the edge.

3. The method as claimed in claim 2, wherein constructing the edge between the first vertex subset and the second vertex subset comprises:
for each transaction identifier, executing the following:

determining, in the first vertex subset, a first address vertex and a first identifier vertex, which correspond to the transaction identifier, and determining, in the second vertex subset, a second address vertex and a second identifier vertex, which correspond to the transaction identifier; and
constructing an edge between the first address vertex and the second identifier vertex, and constructing an edge between the second address vertex and the first identifier vertex.

4. The method as claimed in claim 1, wherein obtaining, according to the transaction bipartite graph and the graph embedding algorithm, the address vectors respectively corresponding to the one or more transaction input addresses and the one or more transaction output addresses comprises:

determining, according to the edge connected to each vertex in the transaction bipartite graph and a preset walk direction parameter, a connection probability that any one of vertexes in the transaction bipartite graph is connected to another vertex in the transaction bipartite graph, and forming a transition probability matrix according to the connection probability;

generating, according to the transition probability matrix, a walk sequence set respectively corresponding to one or more vertexes;

performing gradient descent optimization on the graph embedding algorithm according to the walk sequence set; and

generating, according to an optimization result, the address vector corresponding to each address vertex in the transaction bipartite graph.

5. The method as claimed in claim 4, wherein generating, according to the transition probability matrix, the walk sequence set respectively corresponding to the one or more vertexes comprises:

for each current vertex of the walk sequence set to be generated: using the current vertex as a first-row-column bit of the walk sequence set;

circularly executing the following steps, until the number of generated walk sequences is not less than a preset sequence sampling number: according to a preset walk length and the transition probability matrix, generating a walk sampling sequence corresponding to the current vertex, and selecting, from the transaction bipartite graph, vertexes other than the current vertex as the current vertexes; and

generating the walk sequence set according to a selected sequence of each current vertex, and the walk sampling sequence corresponding to each current vertex.

6. The method as claimed in claim 5, wherein according to the preset walk length and the transition probability matrix, generating the walk sampling sequence corresponding to the current vertex comprises:

using the current vertex as a first bit of the walk sampling sequence; and

circularly executing the following step, until the number of determined vertex bits is not less than the walk length: selecting, according to the transition probability matrix, a vertex with the highest connection probability to the current vertex as a next vertex of the walk sampling sequence, and using the next vertex as the current vertex.

7. The method as claimed in claim 1, wherein
the graph embedding algorithm comprises any one of the following: a node2vec algorithm, a DeepWalk algorithm, a SocialGCN algorithm, and an SDNE algorithm.

8. The method as claimed in claim 4, wherein, when the graph embedding algorithm is a node2vec algorithm, performing the gradient descent optimization on the graph embedding algorithm according to the walk sequence set comprises:
for each vertex in the transaction bipartite graph, executing the following:

determining a target walk sampling sequence from one or more walk sequence sets, wherein a first bit of the target walk sampling sequence is the vertex;

according to a preset neighborhood-sampling policy and the target walk sampling sequence, determining a neighborhood vertex set corresponding to the vertex;

determining one-hot vectors respectively corresponding to neighborhood vertexes in the neighborhood vertex set according to the vertex,

using the one-hot vectors as inputs of the node2vec algorithm, so as to obtain probabilities corresponding to the neighborhood vertexes; and

optimizing the node2vec algorithm according to the probabilities corresponding to the neighborhood vertexes, so as to enable the probabilities corresponding to the neighborhood vertexes to be maximized.

9. The method as claimed in claim 8, wherein generating, according to the optimization result, the address vector corresponding to each address vertex in the transaction bipartite graph comprises:
obtaining, according to the optimization result of the node2vec algorithm, an embedding vector corresponding to the one-hot vector, and using the embedding vector as the address vector.

10. The method as claimed in claim 1, wherein constructing the transaction bipartite graph corresponding to the blockchain transaction information comprises:

analyzing the blockchain transaction information to obtain transaction amounts respectively corresponding to the one or more transaction input addresses and one or more transaction output addresses;

filtering the one or more transaction input addresses and the one or more transaction output addresses when a corresponding transaction amount is less than a preset amount threshold; and

constructing the transaction bipartite graph according to the filtered transaction input addresses and the filtered transaction output addresses.

11. The method as claimed in claim 1, wherein
the address classifier is trained on the basis of a plurality of address vectors corresponding to the blockchain transaction information, and labels respectively corresponding to the plurality of address vectors, wherein the plurality of address vectors are obtained according to the graph embedding algorithm.

12. The method as claimed in any one of claims 1 to 11, wherein
the blockchain address is a blockchain address based on an Unspent Transaction Outputs (UTXO) model.

13. An apparatus for classifying a blockchain address, comprising: an information acquisition module, a construction module, a vector determination module, and an address classification module, wherein

the information acquisition module is configured to acquire blockchain transaction information, wherein the blockchain transaction information indicates one or more transaction input addresses and one or more transaction output addresses;

the construction module is configured to construct a transaction bipartite graph corresponding to the blockchain transaction information;

the vector determination module is configured to obtain, according to the transaction bipartite graph and a graph embedding algorithm, address vectors respectively corresponding to the one or more transaction input addresses and the one or more transaction output addresses; and

the address classification module is configured to use the address vectors as inputs of an address classifier, so as to classify the one or more transaction input addresses and/or the one or more transaction output addresses by the address classifier.

14. The apparatus as claimed in claim 13, wherein the blockchain transaction information further indicates a transaction identifier; and
the construction module is configured to construct a first vertex subset according to the one or more transaction input addresses and the transaction identifier, and construct a second vertex subset according to the one or more transaction output addresses and the transaction identifier; and construct an edge between the first vertex subset and the second vertex subset according to a transaction input address and a transaction output address which correspond to the same transaction identifier indicated by the blockchain transaction information, so as to form the transaction bipartite graph by the first vertex subset, the second vertex subset, and the edge.

15. The apparatus as claimed in claim 14, wherein
the construction module is configured to, for each transaction identifier, execute the following: determining, in the first vertex subset, a first address vertex and a first identifier vertex, which correspond to the transaction identifier, and determining, in the second vertex subset, a second address vertex and a second identifier vertex, which correspond to the transaction identifier; and constructing an edge between the first address vertex and the second identifier vertex, and construct an edge between the second address vertex and the first identifier vertex.

16. The apparatus as claimed in claim 13, wherein
the vector determination module is configured to determine, according to the edge connected to each vertex in the transaction bipartite graph and a preset walk direction parameter, a connection probability that any one of vertexes in the transaction bipartite graph is connected to another vertex in the transaction bipartite graph, and form a transition probability matrix according to the connection probability; generate, according to the transition probability matrix, a walk sequence set respectively corresponding to one or more vertexes; perform gradient descent optimization on the graph embedding algorithm according to the walk sequence set; and generate, according to an optimization result, the address vector corresponding to each address vertex in the transaction bipartite graph.

17. The apparatus as claimed in claim 16, wherein
the vector determination module is configured to, for each current vertex of the walk sequence set to be generated, use the current vertex as a first-row-column bit of the walk sequence set; circularly execute the following steps, until the number of generated walk sequences is not less than a preset sequence sampling number: according to a preset walk length and the transition probability matrix, generating a walk sampling sequence corresponding to the current vertex, and selecting, from the transaction bipartite graph, vertexes other than the current vertex as the current vertexes; and generating the walk sequence set according to a selected sequence of each current vertex, and the walk sampling sequence corresponding to each current vertex.

18. The apparatus as claimed in claim 17, wherein
the vector determination module is configured to use the current vertex as a first bit of the walk sampling sequence; and circularly execute the following step, until the number of vertex bits is not less than the walk length: selecting, according to the transition probability matrix, a vertex with the highest connection probability to the current vertex as a next vertex of the walk sampling sequence, and using the next vertex as the current vertex.

19. The apparatus as claimed in claim 13, wherein
the graph embedding algorithm comprises any one of the following: a node2vec algorithm, a DeepWalk algorithm, a SocialGCN algorithm, and an SDNE algorithm.

20. The apparatus as claimed in claim 16, wherein, when the graph embedding algorithm is a node2vec algorithm, the vector determination module is configured to, for each vertex in the transaction bipartite graph, execute the following: determining a target walk sampling sequence from one or more walk sequence sets, wherein a first bit of the target walk sampling sequence is the vertex; according to a preset neighborhood-sampling policy and the target walk sampling sequence, determining a neighborhood vertex set corresponding to the vertex; determining one-hot vectors respectively corresponding to the neighborhood vertexes in the neighborhood vertex set according to the vertex, using the one-hot vectors as inputs of the node2vec algorithm, so as to obtain probabilities corresponding to the neighborhood vertexes; and optimizing the node2vec algorithm according to the probabilities corresponding to the neighborhood vertexes, so as to enable the probabilities corresponding to the neighborhood vertexes to be maximized.

21. The apparatus as claimed in claim 20, wherein
the vector determination module is configured to obtain, according to the optimization result of the node2vec algorithm, an embedding vector corresponding to the one-hot vector, and use the embedding vector as the address vector.

22. The apparatus as claimed in claim 13, wherein
the construction module is configured to analyze the blockchain transaction information to obtain transaction amounts respectively corresponding to the one or more transaction input addresses and the one or more transaction output addresses; filter the one or more transaction input address and the one or more transaction output address when a corresponding transaction amount is less than a preset amount threshold; and construct the transaction bipartite graph according to the filtered transaction input addresses and the filtered transaction output addresses.

23. The apparatus as claimed in claim 13, wherein
the address classifier is trained on the basis of a plurality of address vectors corresponding to the blockchain transaction information, and labels respectively corresponding to the plurality of address vectors, wherein the plurality of address vectors are obtained according to the graph embedding algorithm.

24. The apparatus according to any one of claims 13 to 23, wherein
the blockchain address is a blockchain address based on an Unspent Transaction Outputs (UTXO) model.

25. A server for classifying a blockchain address, comprising:

   one or more processors; and
   a storage apparatus, configured to store one or more programs, wherein
   when the one or more programs are executed by the one or more processors, the one or more processors are enabled to implement the method as claimed in any one of claims 1 to 12.

26. A computer-readable medium, having a computer program stored thereon, wherein the method as claimed in any one of claims 1 to 12 is implemented when the program is executed by a processor.

Fig. 1

S101

Blockchain transaction information is acquired, and the blockchain transaction information indicates one or more transaction input addresses and one or more transaction output addresses

S102

A transaction bipartite graph corresponding to the blockchain transaction information is constructed

S103

Address vectors respectively corresponding to the one or more transaction input addresses and the one or more transaction output addresses are obtained according to the transaction bipartite graph and a graph embedding algorithm

S104

The address vectors are used as enters of an address classifier, so as to classify the one or more transaction input addresses and/or the one or more transaction output addresses by the address classifier

Fig. 2

| Input address $e_1$ | Output address $o_1$ |
| Input address $e_2$ | Output address $o_2$ |
| Input address $e_3$ | Output address $o_3$ |
| ...... | ...... |
| Input address $e_{n1}$ | Output address $o_{n2}$ |

Fig. 3

Fig. 4

| Starting point of the transaction bipartite graph | End point of the transaction bipartite graph |
|---|---|
| Transaction input address | Transaction identifier |
| Transaction identifier | Transaction output address |

Fig. 5

Fig. 6

600

603

602

601

604

605

Fig. 7

700

| CPU | 701 | ROM | 702 | RAM | 703 |

704

I/O interface — 705

| Input portion | Output portion | Storage portion | Communication portion | Driver — 710 |
| 706 | 707 | 708 | 709 | |

Removable medium — 711

## INTERNATIONAL SEARCH REPORT

| International application No. |
| --- |
| **PCT/CN2022/089008** |

**A. CLASSIFICATION OF SUBJECT MATTER**

G06F 16/906(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT; ENTXT; CJFD; ENTXTC; DWPI; CNKI; CNABS: 区块链, 交易, 图, 二部图, 输入, 输出, 地址, 图嵌入, 向量, 分类, 比特币, 游走, blockchain, trade, chart, graph, bipartite graph, input, output, address, graph embedding, vector, classify, bitcoin, wander

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113190730 A (THE PEOPLE'S BANK OF CHINA, DIGITAL CURRENCY INSTITUTE) 30 July 2021 (2021-07-30) description, paragraphs [0002]-[0168] | 1-26 |
| X | CN 109918584 A (INSTITUTE OF AUTOMATION, CHINESE ACADEMY OF SCIENCES) 21 June 2019 (2019-06-21) description, paragraphs 2-123 | 1-26 |
| X | CN 111340509 A (ALIPAY (HANGZHOU) INFORMATION TECHNOLOGY CO., LTD.) 26 June 2020 (2020-06-26) description, paragraphs 2-63 | 1-26 |
| A | US 2020160344 A1 (CIPHERTRACE INC.) 21 May 2020 (2020-05-21) entire document | 1-26 |
| A | CN 107194723 A (UNIVERSITY OF SCIENCE AND TECHNOLOGY OF CHINA) 22 September 2017 (2017-09-22) entire document | 1-26 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 July 2022** | **18 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/089008**

| Patent document cited in search report | | | Publication date (day/month/year) | Patent family member(s) | | | Publication date (day/month/year) |
|---|---|---|---|---|---|---|---|
| CN | 113190730 | A | 30 July 2021 | None | | | |
| CN | 109918584 | A | 21 June 2019 | None | | | |
| CN | 111340509 | A | 26 June 2020 | CN | 111340509 | B | 21 August 2020 |
| US | 2020160344 | A1 | 21 May 2020 | WO | 2020106639 | A1 | 28 May 2020 |
| | | | | EP | 3884411 | A1 | 29 September 2021 |
| | | | | GB | 2594396 | A | 27 October 2021 |
| | | | | EP | 3884441 | A1 | 29 September 2021 |
| CN | 107194723 | A | 22 September 2017 | CN | 107194723 | B | 23 April 2021 |

Form PCT/ISA/210 (patent family annex) (January 2015)

**REFERENCES CITED IN THE DESCRIPTION**

**Patent documents cited in the description**

• CN 202110482171